# EUROPÄISCHE PATENTSCHRIFT

(11) **EP 1 075 204 B1**
(45) Veröffentlichungstag und Bekanntmachung des Hinweises auf die Patenterteilung: **08.12.2004**
(21) Anmeldenummer: 99929037.2
(22) Anmeldetag: 26.04.1999
(51) Int. Cl.: A47J 39/00

(54) **VERFAHREN ZUR ERWÄRMUNG VORGEFERTIGTER SPEISEN**
METHOD FOR HEATING PRE-PREPARED MEALS
PROCEDE POUR RECHAUFFER DES ALIMENTS DEJA PREPARES

(30) Priorität: 27.04.1998 DE 19818831
(43) Veröffentlichungstag der Anmeldung: 14.02.2001
(60) Teilanmeldung: 04021205.2
(73) Patentinhaber: Walter, Hubert Eric, 89231 Neu-Ulm (DE); Airbus Deutschland GmbH, 21129 Hamburg (DE)
(72) Erfinder: Walter, Hubert Eric, 89231 Neu-Ulm (DE); Hiesener, Stefan, Dr., 21614 Buxtehude (DE); Gysemberg, Rudy, 20537 Hamburg (DE)
(74) Vertreter: Pfenning, Meinig & Partner GbR
(86) Internationale Anmeldenummer: PCT/DE1999/001249
(87) Internationale Veröffentlichungsnummer: WO 1999/055212

(56) Entgegenhaltungen:
- EP-A- 0 757 509
- EP-A- 0 818 169
- DE-A- 2 711 088
- DE-A- 3 340 684
- FR-A- 2 363 308
- FR-A- 2 447 174
- GB-A- 2 300 702
- US-A- 4 323 110
- US-A- 5 075 121
- PATENT ABSTRACTS OF JAPAN vol. 199, no. 806, 30. April 1998 & JP 10 028648 A (MATSUSHITA ELECTRIC IND CO LTD), 3. Februar 1998

## Beschreibung

Die Erfindung betrifft ein Verfahren zur Erwärmung vorgefertigter Speisen, wobei die verschiedensten Anwendungsgebiete des Cateringbereiches, wie z.B. die Ausrichtung von Banketten, die Speiseversorgung in öffentlichen Einrichtungen, wie insbesondere Krankenhäuser und Pflegeheime sowie die Speiseversorgung in Fahrzeugen und hier insbesondere in Flugzeugen erfolgen kann.

Dabei geht die Erfindung von dem in DE 27 11 088 beschriebenen Verfahren und der Vorrichtung zum Erwärmen von Lebensmitteln aus, bei dem die Erwärmung der sich in geschlossenen Behältern befindenden Nahrungsmitteln, mittels Induktionserwärmung von leitenden Elementen in den Behältern erfolgt.

Bei der dort beschriebenen Lösung ist die Verwendung von speziellen Nahrungsmittelbehältern, wie dies auch an anderen Orten bei der induktiven Erwärmung von Nahrungsmitteln der Fall ist, generell erforderlich. Spezielles Geschirr oder, wie in DE 27 11 088 ebenfalls ausgeführt, besonders ausgestattete Behälter bzw. Tabletts zu verwenden, deren erhöhter Kostenaspekt nicht generell gerechtfertigt ist, wird auch bisher von den Anwendern in der Regel nur selten akzeptiert.

Außerdem erfolgt die Erwärmung, die durch induzierte Wirbelströme erreicht werden kann, bei den bekannten Systemen ausschließlich über Wärmeleitung, Konvektion und Strahlung, die insbesondere bei der Konvektion und Strahlung durch das die zu erwärmenden Nahrungsmittel umgebende Medium Luft behindert wird, so daß ein erhöhter Zeitaufwand und eine Verringerung des Wirkungsgrades in Kauf genommen werden muß.

Ein weiterer nachteiliger Aspekt, der bei dieser bekannten Lösung zu verzeichnen ist, besteht darin, daß es für die Effektivität dieses Verfahrens erforderlich ist, den Abstand zwischen den Induktionsspulen und den eigentlich zu erwärmenden metallischen Teilen, der für die Nahrungsmittelaufnahme vorgesehenen, zu erwärmenden Behälter sowie deren Positionierung optimal einzustellen. Hierfür wird dort eine aufwendige Mechanik vorgeschlagen, mit der die die Induktionsheizspulen aufnehmenden Elemente zumindest in ihrer Höhe vor dem Heizvorgang entsprechend eingestellt werden können.

Insbesondere in Flugzeugen ist es üblich, herkömmliche durch Widerstandsheizung betriebene Öfen, die mit Umluft betrieben werden, zur Erwärmung von Speisen vorzusehen. Durch den relativ geringen Wirkungsgrad dieser bekannten Öfen kommt es zu einem großen erforderlichen Zeit- und Energieaufwand, der sich insbesondere auf diesem Sektor äußerst nachteilig auswirkt. Die normalerweise in ihrer Dimensionierung standardisierten Öfen müssen relativ aufwendig mit den Behältern, zu denen auch herkömmliches Geschirr zählen kann, manuell bestückt und über einen Zeitraum von ca. 20 Min. entsprechend auf die gewünschte Temperatur erwärmt werden und im Nachgang dazu wieder einzeln entnommen, auf Tabletts einzeln zugeordnet werden und die vollständig bestückten Tabletts in Isolierwagen eingeführt und mit diesen zu den einzelnen Passagieren transportiert und dort ausgegeben werden.

Da die verschiedenen Cateringunternehmen auch verschiedene Behältnisse aus verschiedenen Materialien und in verschiedenen Dimensionen verwenden, kann es zu weiter erhöhtem Energieverbrauch und zu keiner optimalen Ausnutzung des in den dort verwendeten Öfen zur Verfügung stehenden Raumes kommen.

Des weiteren ist aus JP-A-100 28 648 ein Topf zum Garen von Gyoza bekannt. Gyozas sind gefüllte Teigtaschen, die eine asiatische Spezialität darstellen. Die Gyozas können in diesem Topf induktiv erwärmt werden, wobei sie auf einer metallischen oder Kohlenstoff enthaltenden Bodenplatte angeordnet werden und unter der durch eine Platte aus nichtinduktivem Material getrennte Induktionsspulen angeordnet sind. Zusätzlich befindet sich in einem solchen Topf Wasser, das unter Ausnutzung der induzierten Wärme erwärmt wird, so daß die Gyozas in einem Topf unter Nutzung des Schnellkochtopf-Prinzips zubereitet werden können.

Es ist daher Aufgabe der Erfindung, eine Möglichkeit vorzugeben, um vorbereitete Speisen in kurzer Zeit, mit hoher Effektivität und guter Qualität, mit geringem Aufwand soweit zu erwärmen, daß sie zum Verzehr geeignet sind.

Erfindungsgemäß wird diese Aufgabe mit den Merkmalen des Patentanspruchs 1 gelöst. Vorteilhafte Ausgestaltungsformen und Weiterbildungen der Erfindung ergeben sich mit den in den untergeordneten Ansprüchen enthaltenen Merkmalen.

Bei der Erfindung ist es insbesondere wichtig, daß die Erwärmung der Speisen, wenn überhaupt, durch Konvektion, Induktion, oder Wärmestrahlung zusätzlich durch Heißdampf erreicht wird. Dadurch kann nicht nur die Effektivität, d.h. also der Wirkungsgrad verbessert und die Erwärmungszeit verringert, sondern auch eine Regeneration der vorbereiteten Speisen erreicht werden, die sich nicht nur in einer Verbesserung des ästhetischen Anblicks, sondern auch geschmacklich positiv auswirkt.

Hierfür wird so verfahren, daß der Dampf direkt in einer Vorrichtung, mit der die Speisen erwärmt werden sollen, erzeugt wird.

Die Temperatur wird mit Hilfe der Induktion auf einem ausreichenden Niveau gehalten, so daß eine Kondensation des Dampfes während der Erwärmungsphase vermieden werden kann. Der Dampf wird direkt in der Vorrichtung bei der Erwärmung erzeugt, wobei die Temperatur so gewählt werden soll, daß ein Heißdampf für die Erwärmung der Speisen nutzbar ist.

Der Dampf wird mit Hilfe der Induktionsheizspulen erzeugt, so daß auf andere Heizsysteme bzw. Elemente verzichtet werden kann.

Günstigerweise werden die Behältnisse, in denen die zu erwärmenden Speisen enthalten sind, in eine entsprechende Vorrichtung eingesetzt und in bezug zu den Induktionsheizspulen positioniert, wobei besonders günstig Induktionsheizspulen für Ober- und Unterhitze ober- bzw. unterhalb eines solchen Behältnisses, das zu erwärmende Speisen enthält, angeordnet werden können.

Da gemäß der Erfindung nahezu beliebige Behältnisse verwendet werden sollen, also auf kein Spezialgeschirr zurückgegriffen werden muß, ist es günstig die Wirbelströme in elektrisch leitenden Materialien (bevorzugt ferro- oder paramagnetisch), die günstig in Form von Folien, Folienteilen oder Blechen Bestandteil einer solchen Vorrichtung zur Erwärmung oder von Einschubbehältern, auf die später noch einzugehen sein wird, sind.

Dabei können insbesondere die für die Oberhitze zu nutzenden in der Regel metallischen flächigen Elemente geschlitzt oder kunststoffbeschichtet ausgeführt sein, wodurch sich eine selbstständige Regelung von Leistung und demzufolge auch der Temperatur, eine Erhöhung der Korrosionsbeständigkeit und/oder Wärmeabgabefähigkeit erreichen läßt.

Die flächigen Elemente, in denen durch Induktion die erforderliche Wärme für die Unterhitze erzeugt werden soll, können vorteilhaft auch für die Erzeugung des Dampfes ausgenutzt werden. Dabei können diese Teile in bestimmten Bereichen so ausgebildet sein, daß sie das für die Erwärmung und Regeneration der Speisen erforderliche Wasser für die Dampferzeugung aufnehmen können und beispielsweise kanalartig und besonders vorteilhaft ringförmig um das jeweilige Behältnis ausgebildet sind.

Solche Folien bzw. Bleche können Oberflächen behandelt sein, um einmal ihre Wärmeabgabefähigkeit zu verbessern und zum anderen einen Korrosionsschutz zu bilden.

Dabei können die Folien bzw. Bleche einzeln einer Induktionsheizspule, aber auch ein solches Element mehreren solcher Spulen zugeordnet, angeordnet werden.

Es besteht außerdem die Möglichkeit, eine zusätzliche Induktion in den die Speisen enthaltenden Behältnissen auszunutzen, in denen ein solches Behältnis mit einem Ring aus einem hierfür geeigneten Material umschlossen ist, der das Feld in Richtung des Behältnisbodens bündeln kann.

Zu beachten ist, daß das für die Unterhitze zuständige flächige Element ggf. nur bestimmte Teile des Feldes absorbieren kann, wenn es beispielsweise aus einem relativ ungünstigen Material besteht, geschlitzt ist oder keine ausreichende Dicke für eine volle Skintiefe aufweist, so daß der übrige Anteil in den Boden des Behältnisses übergeht.

Eine weitere Möglichkeit, die mit der erfindungsgemäßen Lösung eingesetzt werden kann, besteht darin, mit Deckeln verschlossene Behältnisse zu verwenden, wobei die Deckel aus einem elektrisch leitenden Material, z.B. Metall, bestehen und ähnlich wie z.B. Joghurtbecher ausgebildet sein können. Dabei kann der obere Rand des Behältnisses und/oder der Deckel so ausgestaltet sein, daß diese Behältnisse in ein rahmenförmiges Element eingesetzt oder eingehangen werden können, und so in einer entsprechenden Vorrichtung die Erwärmung durchgeführt werden kann. Dabei kann die Rasterung des rahmenförmigen Elementes und die Größe der Behältnisse optimal, auf die für die Erwärmung zur Verfügung stehende Fläche angepaßt werden, so daß eine maximale Raumausnutzung möglich ist.

Der für die Erwärmung zu nutzende Dampf kann aber auch durch Erhitzen von Wasser erzeugt werden, das beispielsweise in einen porösen Körper, der zumindest teilweise aus einem elektrisch leitenden Material bestehen kann, gespeichert werden kann. Hierfür können z.B. verschiedene gesinterte Metallkörper mit ausreichend großen Poren und Porenvolumen eingesetzt werden. Ein solcher poröser Körper kann als Ring ausgebildet werden, der einen größeren Durchmesser als die jeweiligen verwendeten Behältnisse aufweist und in den solche Behältnisse eingesetzt werden können, wobei hier wieder eine entsprechende Positionierung zu mindestens einer Induktionsheizspule zu berücksichtigen ist. Die porösen Körper haben weiter den Vorteil, daß in ihnen ohne größeren Aufwand eine ganz bestimmte Menge an Wasser aufgenommen und gespeichert werden kann. Die porösen Körper können aber auch als reiner Wasserspeicher aus einem anderen Material bestehen und die Verdampfung unter Ausnutzung von Wärmeleitung, Konvektion und/oder Strahlung zu den Körpern erreicht werden.

Eine weitere Möglichkeit, mit der Wasser für die Verdampfung bereit gestellt werden kann, besteht darin, daß beispielsweise röhrchenförmige Gebilde verwendet werden, in deren Hohlräumen das Wasser zwischengespeichert werden kann. Der gebildete Dampf kann dann gegebenenfalls durch permeable Membranen diffundieren oder aus Öffnungen austreten. Grundsätzlich besteht auch die Möglichkeit, das Wasser in austauschbaren Vorratsfläschchen zur Verfügung zu halten, die bevorzugt bei der Erwärmung mit ihrer Öffnung nach unten angeordnet werden. So kann Wasser oder extern erzeugter Dampf in Röhrchen gefüllt oder hindurch geleitet werden, bei denen Löcher ggf. temporär mit Folien, vorteilhalft aus semipermeablem Material, verschlossen sind.

Das Wasser kann aber auch in vollständig aus Folien bestehenden Behältnissen zwischengespeichert werden. Es können reine Kunststoffolien, Kunststoff- und Metallfolien gemeinsam oder metallbeschichtete Folien verwendet werden. Ein solches Behältnis kann ein Einwegprodukt sein. Das Wasser bzw. der bereits gebildete Wasserdampf kann nach manuellem Öffnen der Folie oder temepraturbedingt nach Überschreiten einer bestimmten Temperatur bei der Erwärmung austreten.

Für den Fall, daß Behältnisse für die zu erwärmenden Speisen verwendet werden, die durch ihre Gestaltung und Materialauswahl geeignet sind, um induktiv erwärmt zu werden, besteht in einfachster Form die Möglichkeit, das für die Dampferzeugung erforderliche Wasser direkt in einem solchen Behältnis vor der Erwärmung der Speisen zur Verfügung zu halten, wobei hierfür eventuell separierte Behältnisbereiche oder zumindest teilweise flexible Behältnisse aus/mit Folienmaterial verwendet werden können, die bei steigendem Dampfdruck aufplatzen, Öffnungen freigeben oder sich gegebenenfalls auflösen.

Wird der Dampf, der für die Erwärmung der Speisen genutzt wird, direkt in den Behältnissen erzeugt, ist es zweckmäßig, das Behältnis oder einen Bereich um dieses Behältnis mit einem deckelartigen Gebilde, bevorzugt gasdicht abzudecken, so daß ein in sich geschlossenes Milieu entsteht. Diese Lösung bietet sich insbesondere für den Fall an, daß bereits bestückte größerformatige Tabletts bzw. solche ähnlichen Gebilde verwendet werden, auf denen Behältnisse mit verschiedenen Speisen bzw. Getränken angeordnet werden können, bei denen nicht alle erwärmt werden sollen. Dies hat den Vorteil, daß ein solches Tablett automatisch vorbestückt werden kann und im Nachgang zur Erwärmung keine zusätzlichen Arbeitsaufwendungen mehr erforderlich sind, um die verschiedenen Speisen und Getränke zu einer gemeinsamen Portion zusammenfassen zu müssen.

Wichtig ist es außerdem, daß die für die Erwärmung erforderliche Dampfmenge durch Bereitstellung einer speisenspezifischen Wassermenge beeinflußt wird, so daß die Qualität der erwärmten Speisen nicht negativ, sondern positiv beeinflußt wird.

Im Gegensatz zu der bereits beschriebenen Tablettlösung kann die Erwärmung von in Behältnissen aufgenommenen, vorbereiteten Speisen auch durch geringfügige Modifikation von herkömmlichen Vorrichtungen, wie sie beispielsweise die bisher in Flugzeugen verwendeten Umluftöfen sind, erreicht werden. Dabei werden solche Erwärmungseinrichtungen zumindest nahezu identisch dimensioniert und mit entsprechenden Anschlußmöglichkeiten für Elektroenergie ausgestattet.

Die Elemente zur Steuerung und Bedienung einer solchen Erwärmungseinrichtung für Speisen sollten auf einem abnehmbaren Paneel angeordnet oder in einer Tür integriert sein, um den erforderlichen Raum zu minimieren. Für die Steuerung können auch andere Elemente, wie die beispielsweise in Luftfahrzeugen ohnehin vorhandene Elektronik verwendet werden.

Vorteilhaft ist die Kombination von Erwärmung und alternierender Kühlung in einem solchen Ofen oder Speisetransportwagen. Es können kombinierte Geräte verwendet werden, in denen die Speisen und Getränke erst gekühlt und erst unmittelbar vor dem Verzehr erwärmt werden. Dadurch kann Lagerraum gespart werden. Für die Kühlung kann auf herkömmliche Prinzipien zurückgegriffen werden.

Die mit Speisen befüllten Behältnisse werden in zusätzliche Einschubbehälter eingeführt und durch bevorzugt ihrer eigenen Form und Dimensionierung so zu Induktionsheizspulen positioniert, daß eine optimale Erwärmung erreicht wird. Solche Induktionsheizspulen sind zumindest im Boden eines solchen Einschubbehälters angeordnet, wobei auch für das Erreichen einer entsprechenden Oberhitze entsprechende Induktionsheizspulen im Oberteil eines solchen Einschubbehälters integriert sein können. Zur induktiven Erwärmung können Boden und Decke eines solchen Einschubbehälters, wieder wie bereits beschrieben, mit flächigen Elementen, die durch Induktion erwärmt werden können, versehen sein. Außerdem kann in einem solchen dann geschlossenen Einschubbehälter auch wieder die Dampferzeugung, wie ebenfalls bereits beschrieben, auch durch nahezu ausschließlich induktive Beheizung erreicht werden.

Solche Einschubbehälter können auch zur Erwärmung/-Regeneration von z.B. bereits auf Tellern drapierten Speisen einegesetzt werden, wobei auch hier die Dimensionierung der Behälter unter Beachtung der üblichen Normgrößen erfolgen sollte.

Da, wie bereits erwähnt, Standardmaße für die Vorrichtung zur Erwärmung (Öfen) und Speisetransportwagen, mit denen die erwärmten Speisen an den Ort des eigentlichen Verzehrs von der Erwärmung transportiert werden, beachtet werden müssen, ist es zweckmäßig, die zur Erwärmung verwendeten Behältnisse entsprechend raumoptimiert zu dimensionieren, so daß der für die Erwärmung und den Transport zur Verfügung stehende Raum maximal ausgenutzt werden kann. Hierfür sollte die jeweils in einer Ebene zur Verfügung stehende Fläche nahezu exakt ein ganzzahliges Vielfach des Flächenbedarfs der einzelnen Behälter betragen, wodurch eine Erhöhung der Flächenausnutzung und Kapazität um bis zu 50 % erreichbar ist.

Solche Speisetransportwagen sind in der Regel nach außen isoliert, um ein unerwünschtes Abkühlen bzw. Erwärmen, der darin enthaltenen entsprechenden Speisen zumindest zu behindern. Hierfür werden herkömmliche Isoliermaterialien verwendet, die begrenzte K-Werte erreichen und eine Masseerhöhung bewirken. Insbesondere in Flugzeugen, in denen solche Speisetransportwagen üblicherweise als Trolleys bezeichnet werden, ist es aber äußerst günstig, die Isolierung durch Erzeugung eines Vakuums, zumindest jedoch eines Teilvakuums, in der Wandung eines solchen Trolleys zu erreichen. Da in Flugzeugen ab bestimmten Flughöhen ohnehin ein entsprechender Unterdruck zur Verfügung steht und ein solches Unterdruckerzeugungssystem ohnehin für die dort üblicherweise zu verwendenden Toilettensysteme vorhanden ist, kann durch einen entsprechenden Anschluß zumindest ein Teilvakuum erzeugt bzw. bei Bedarf wieder ohne weiteres erneuert werden. Dabei kann dann nicht nur die Wandung teilevakuiert, sondern auch bei entsprechender Abdichtung der gesamte Inhalt eines solchen Trolleys zumindest teilevakuiert werden. Außerdem kann das Vakuum oder Teilvakuum mittels Ejektoren günstig erzeugt werden. Entsprechend können auch die Einschubbehälter allein oder zusätzlich vakuumiert werden.

Die Erwärmung der Speisen kann aber auch direkt in einem solchen Speisetransportwagen erfolgen, wobei diese Möglichkeit bevorzugt dann angewendet werden kann, wenn bereits vorbestückte Tabletts, auf denen verschiedene zu erwärmende bzw. kalt zu haltende Speisen und Getränke angeordnet sind.

In diesem Fall können ebene, zungenartige Elemente verwendet werden, die mit einem Hochspannungsfrequenzgenerator über Leitungen verbunden sind und in die Induktionsheizspulen integriert sind. Diese zungenartigen Elemente können dann durch geöffnete Türen von zumindest einer Seite oder z.B. in den Seitenwänden ausgebildeten Schlitzen in einen solchen Trolley eingeführt werden, wobei die Anordnung der Induktionsheizspulen, gegebenenfalls in Verbindung mit den ebenflächigen Elementen, die induktiv erwärmt werden sollen, entsprechend der Positionierung der Behältnisse, in denen die zu erwärmenden Speisen aufgenommen sind, erfolgt, so daß nur dort, wo nötig erwärmt und die anderen Speisen und Getränke nahezu unbeeinflußt bleiben.

An den zungenförmigen Elementen können Profilierungen ausgebildet sein, mit deren Hilfe die Positionierung oder zu erwärmenden Speisen erleichtert wird.

Zur Erkennung der Beschaltung der Induktionsheizspulen und auch zur Messung der Temperatur können die Induktivitätsänderung, die Impedanz, die Kapazität und/oder die Frequenzänderung berücksichtigt werden. Die entsprechende Sensorik und/oder Strom- bzw. Spannungsmessung erfolgt dann bevorzugt mittels der Elektronik für die Steuerung des Frequenzgenerators.

Da in den zungenförmigen Elementen mehrere Induktionsheizspulen angeordnet sein können, die jedoch nicht immer gleichzeitig für die Erwärmung von Speisen benutzt werden sollen bzw. müssen, ist es günstig, eine sogenannte "Topferkennung" vorzusehen, die z.B. in Form einer Induktivitäts-, Impedanz- oder Kapazitätsmessung erfolgen kann.

Da sich der Ohmsche Widerstand und die Induktivität vieler Werkstoffe temperaturabhängig verändert, können diese Eigenschaften zur kontaktlosen Temperaturüberwachung genutzt werden.

Solche zungenartigen Elemente in Verbindung mit dem entsprechenden Hochfrequenzgenerator können ortsfest in Gebäuden, aber auch in Fahrzeugen installiert sein, so daß ein entsprechend vorbestückter Speisetransportwagen zu einer solchen Vorrichtung transportiert, mit dieser entsprechend die gewünschten Speisen erwärmt und anschließend zu dem jeweiligen Endverbraucher transportiert werden. Dadurch läßt sich ein erheblicher Rationalisierungseffekt für die verschiedensten Anwendungsbereiche erreichen.

Dabei können diese zungenartigen Elemente selbstverständlich auch in mehreren Ebenen entsprechend über bzw. unterhalb der zu erwärmenden Behältnisse und ggf. dazwischen z.B. Bleche angeordnet sein.

Vorteilhaft, ist es in jedem Fall die Induktionsspulen in herausnehmbaren Trägern anzuordnen, so daß sie zur Reinigung aus dem Ofen entnommen werden können.

Der elektronisch gesteuerte Hochfrequenzgenerator wird in einem Frequenzbereich oberhalb der Höhrgrenze für den Menschen, normalerweise im Bereich zwischen 20 und 50 kHz betrieben, wobei insbesondere in der Luftfahrtanwendung die Elektronik bevorzugt redundant vorhanden ist, an der Elektroenergieversorgung entsprechende Filter verwendet werden und dort ein Eingang von vorzugsweise 400 Hz Anwendung findet. Sowohl die Elektronik, wie auch der Generator sollten in einem separaten Gehäuse, das bevorzugt auch geeignet geschirmt ausgebildet ist, angeordnet werden, um negative Einflüsse auf die Umgebung zu vermeiden.

Günstig ist es insbesondere oben und unten in einem Ofen Zusatzbauteile, als Ferrite anzuordnen, um einer Gehäuseerwärmung entgegenzuwirken und das elektromagnetische Feld zu beeinflussen (EMV-Schutzfunktion).

Als für die Erwärmung geeignete Behältnisse können solche, die in Sandwichbauweise, außen aus einem Kunststoff, auch in geschäumter Form (Verbesserung der Isolierung), gegebenenfalls mit einer Faserverstärkung versehen, und innenseitig mit Metalleinsätzen oder Beschichtungen verwendet werden. Dabei ist es besonders günstig, daß auch der Rand oberhalb mit einem metallischen Material umschlossen ist, so daß keine direkte Berührung zwischen Kunststoff und Speise auftreten kann. Diese Behältnisse können auch mit einem Deckel, ebenfalls aus einem solchen Verbundmaterial, entsprechend metallisch beschichtet bzw. ausschließlich aus Metall verschlossen werden.

Der Deckel oder ein Einsatz kann auch mit einer separaten Spule, die ausschließlich der Verdampfung von Wasser dient, versehen sein. Der Deckel oder ein Einsatz von Behältnissen oder anderen Elementen kann so gestaltet sein, daß auf ihm Lebensmittel (z.B. Brot), Getränke oder andere Gegenstände (Handtücher) ebenfalls erwärmt werden können.

Der Verbund von Kunststoff und Metall kann dauerhaft z.B. durch Laminieren, Einspritzen, Verkleben erfolgen. Es besteht jedoch auch die Möglichkeit, einen entsprechenden Metalleinsatz, der in den Kunststoff formangepaßt eingesetzt werden kann, zu verwenden. In diesem Fall kann der Metalleinsatz aus dem Kunststoff entfernt, getrennt gelagert und in dieser Form relativ einfach gereinigt werden.

Eine weitere vorteilhafte Ausgestaltung der Erfindung kann dadurch erreicht werden, daß mit hierfür geeigneten Sensoren, die verschiedenen Speisen und dabei insbesondere auch die zu erwärmenden Speisen anhand der verwendeten Behältnisse erkannt werden können, so daß eine Erwärmung gänzlich unterbleibt oder ein für die jeweilige Speise optimales Erwärmungsregime ausgewählt werden kann. Hierfür können Behältnisse aus verschiedenen Farben oder mit einer entsprechenden Codierung versehene verwendet werden, so daß die Temperaturen und Erwärmungszeiten optimal ausgewählt werden können.

Vorteilhaft wirkt es sich auch aus, wenn in den mit vorbereiteten Speisen befüllten Behältnissen zumindest ein Teilvakuum durch Innendruckabsenkung erzeugt wird. Dadurch kann in vielen Fällen sogar auf eine Kühlung auch über mehrere Tage verzichtet und die Oxidation der Lebensmittel zumindest behindert werden. Hierfür können die Behältnisse zusätzliche Anschlüsse mit Ventilen aufweisen, die an eine unterdruckerzeugende Einheit (z.B. einen Ejektor) anschließbar sind.

Bei der Erfindung können außerdem Temperaturmessungen durchgeführt werden, um die jeweiligen Wirbelströme und demzufolge auch die entsprechende Erwärmung zu steuern bzw. zu regeln. Die Temperaturmessung in Verbindung mit einer Zeitmessung sichert, daß die jeweiligen Speisen auf die richtige Temperatur erwärmt werden und es kann eine unerwünschte Beeinträchtigung der Speisen durch Überhitzung vermieden werden.

Mit der Temperaturmessung wird insbesondere die Leistungselektronik zur Steuerung des Frequenzgenerators bzw. die Ansteuerung der einzelnen Induktionsspulen beeinflußt.

Hierfür können die elektrischen bzw. magneteischen Spulenparameter, z.B. über Hilfsspulen gemessen werden. es besteht aber auch die Möglichkeit die Temperatur über Sensoren zu messen. Dabei können solche verwendet werden, die mit den jeweiligen Behältnissen oder ggf. einem rahmenförmigen Element, in das die Behältnisse eingesetzt werden können, unmittelbar kontaktiert werden. Hierfür können stift- oder federförmige Temperaturmeßkontakte, beispielsweise auf Halbleiterbasis messende, verwendet werden. Stifte können für die Messung in Öffnungen in den Behältnissen eingreifen.

Die bereits erwähnten Einschubbehälter oder gegebenenfalls auch entsprechende Behältnisse für Speisen sollten vorteilhaft in bezug auf Breite und Länge unterschiedlich ausgebildet werden, so daß sie immer nur in einer bestimmten Lage in eine Vorrichtung zur Erwärmung bzw. einen Speisetransportwagen eingeführt werden können. Ihre äußere Gestaltung sollte so sein, daß sie sicher und bei geringstem Platzerfordernis auch stapelbar sind. Außerdem sollten Randbereiche vorhanden sein, die es ermöglichen, daß in einer Reihe bzw. nebeneinander angeordnete Einschubbehälter bzw. Behältnisse formschlüssig, z.B. durch Verhaken, temporär miteinander verbunden werden können.

Die Einschubbehälter sollten im wesentlichen aus hochtemperaturfesten Kunststoffen (z.B. Polyhydroxibuterat - kompostierbar) gefertigt sein, die an ihren seitlichen Rändern Elektroden, die als Kontakte dienen, aufweisen. Über diese Elektroden kann die hochfrequente Elektroenergie von außen, zu den im Boden bzw. im Deckenbereich angeordneten Induktionsheizspulen über ebenfalls dort integrierte Verbindungsleitungen gelangen. Diese Elektroden können gleichzeitig für den Halt der Einschubbehälter in verbindung mit im Gehäuse eines Ofens angeordneten Gegenelektroden dienen.

Vorteilhaft sind die Induktionsheizspulen sowohl seriell, wie auch parallel angeordnet und geschaltet.

Mit der Erfindung ist es möglich, die Zeit für die ausreichende und optimale Erwärmung von Speisen im Catering-Bereich um mindestens 50 % zu verringern und auch eine beträchtliche Erhöhung des Wirkungsgrades zu erreichen.

Nachfolgend soll die Erfindung an Hand von Ausführungsbeispielen näher beschrieben werden.

Dabei zeigen:
- Figur 1: eine Vorrichtung zur Erwärmung mit zungenförmigen Elementen, die in einen geöffneten Speisetransportwagen einführbar sind;
- Figur 2: mehrere Speisetransportwagen als Batterie zur seriellen Bestückung mit einer Vorrichtung zur Erwärmung mit zungenförmigen Elementen;
- Figur 3: zungenförmige Elemente mit verschiedenen Behältnissen für Speisen und einem Tablett;
- Figur 4: eine Vorrichtung zur Erwärmung von Speisen mit Einschubbehälter;
- Figur 5: Einschübe mit Durchströmkanälen und
- Figur 6: meherere rahmenförmige Elemente (Racks), zur Aufnahme von Behältnissen, in gestapelter Anordnung.

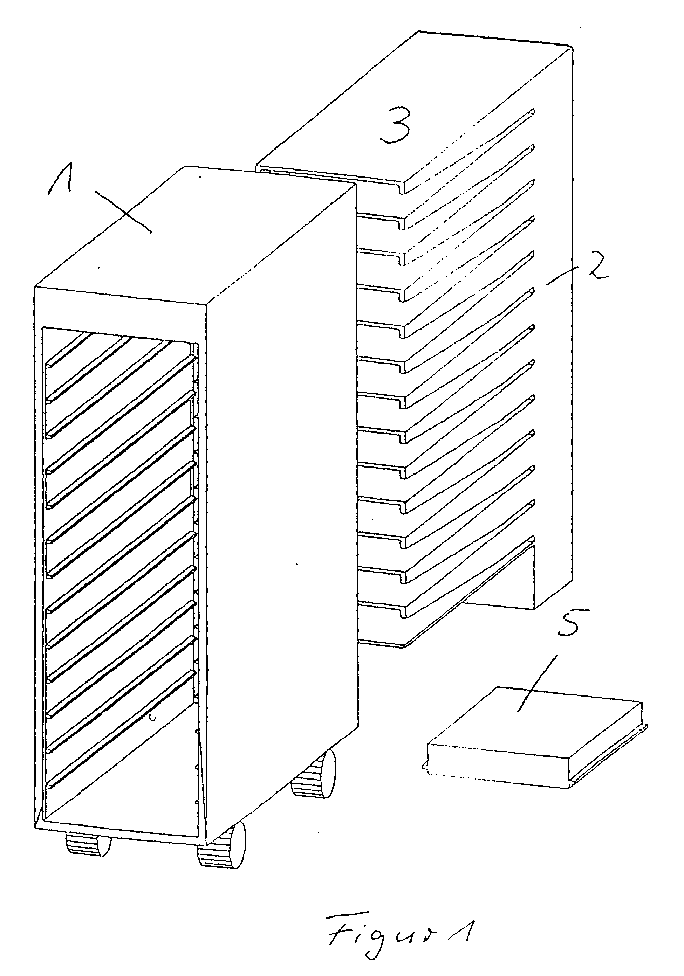

In der Figur 1 ist eine Vorrichtung 2 zur Erwärmung von in Behältnissen aufgenommenen vorbereiteten Speisen dargestellt, die in mehreren übereinader angeordneten Ebenen zungenförmige Elemente 3 aufweist in denen jeweils mindestens eine Induktionsheizspule angeordnet ist. Die zungenförmigen Elemente 3 sind so dimensioniert, daß sie in einen Speisentransportwagen 1 einführbar sind, in dem auf mehreren Ebenen zu erwärmende Behältnisse 5 oder solche auf Tabletts angeordnete Behältnisse angeordnet sind. Solche Behältnisse können auch geschlossene Boxen sein. Die induktive Erwärmung kann wieder mit hierfür geeigneten Behältnissen oder zusätzlichen ebenen Blechen oder Folien aus geeigneten Materialien, wie bereits im allgemeinen Teil der Beschreibung erklärt, erfolgen.

Dabei sind die zungenförmigen Elemente 3 bei diesem Beispiel am Rand profiliert, um eine Stabilitätserhöhung und eine einfachere und exaktere Positionierung, der zu erwärmenden Speisen zu ermöglichen, wobei sich für letzteres eine asymmetrische Profilierung zusätzlich günstig auswirkt.

Die zungenförmigen Elemente 3 können so lang sein, daß sie die gesamte Länge des Speisetransportwagens 1 überdecken und so mehrere dort hintereinander angeordnete Behältnisse gleichzeitig oder lediglich gezielt ausgewählte und zu den Induktionsheizspulen positionierte Behältnisse erwärmt werden.

Außerdem ist ein Einschubbehälter 5, der in den Speisetransportwagen 1 einführbar ist, dargestellt, in den wieder andere Behältnisse mit zu erwärmenden Speisen eingeführt werden können. In diesen Einschubbehälter 5 können metallische Teile, die induktiv erwärmt werden können integriert sein, so daß Oberund Unterhitze ausgenutzt werden können.

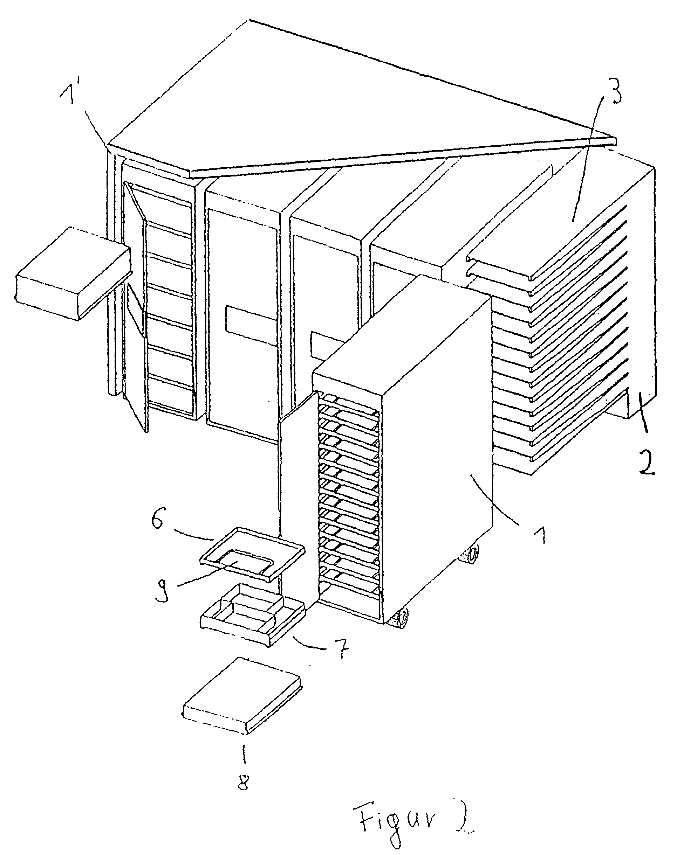

In Figur 2 ist eine Batterie mehrerer Speisetransportwagen 1 gezeigt, die durch die mit der Erfindung erreichbaren kurzen Erwärmungszeiten auch seriell eingesetzt werden können. Dadurch kann eine Vorrichtung 2 zur Erwärmung, hier wieder mit zungenförmigen Elementen 3, für mehrere Speisetransportwagen verwendet werden, so daß auch die Bestückung von Tabletts rationalisiert und die erforderliche Anzahl verringert werden kann.

In der Figur 2 ist links ein Transportwagen 1', mit größeren Aufnahmeboxen erkennbar, die für die Aufnahme von z.B. Duty-Free-Artikeln bzw. Flaschen geeignet sind (als Zwischenlager).

Vor dem mit Bezugszeichen 1 versehenen Speisetransportwagen 1 sind verschiedene Behältnisse 6, 7 und 8 dargestellt. Das Behältnis 6 ist tablettförmig und nur für die Erwärmung vorgesehen. Dabei können mindestens ein Behältnis (nicht dargestellt) eingesetzt werden, das bevorzugt nach oben mit einem Deckel oder einer Haube abgedeckt werden kann, so daß erzeugter Dampf im Behältnis für Erwärmung und Regeneration ausgenutzt werden kann. Dabei können im/ am Behältnis 6 metallische Folie 9 vorhanden sein, die induktiv erwärmt werden kann, so daß auf Spezialgeschirr verzichtet werden kann und Behältnisse aus verschiedensten Materialien oder Kompositen verwendbar sind.

Das Behältnis 7 ist eine Box, mit einer mehrfachen Innenraumaufteilung zur Tennung von verschiedenen Bereichen, die heiß, kalt und neutral sein können, so daß eine Vorbestückung für eine Portion oder ein ganzes Menü möglich ist.

Das untere Behältnis 8 ist geschlossen und es kann ähnlich, wie bei einem Behältnis 7 ein Menü, ausschließlich zu erwärmende Speisen eingesetzt oder auch z.B. Saunatücher oder ähnliche Gegenstände vorgewärmt werden können.

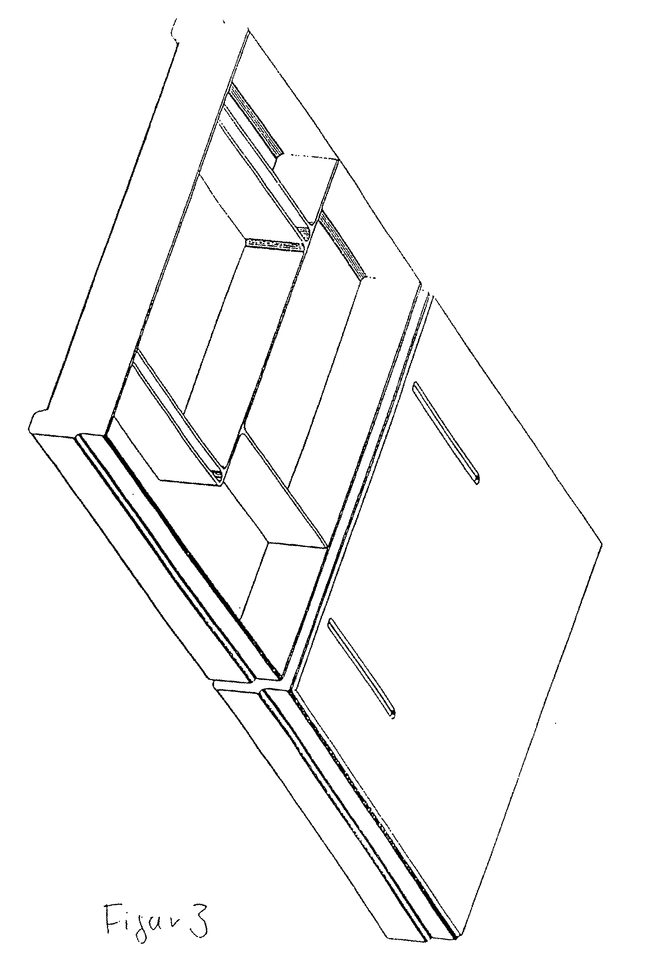

In der Figur 3 sind drei zungenförmige Elemente in Verbindung mit verschiedenen Einschubbehältern dargestellt. Dabei ist der obere boxförmig und kann z.B. ein vollständiges Menü enthalten sowie ganz oder teilweise geschlossen sein. Der mittlere ist eine geschlossene Box und unten ist ein Tablett gezeigt.

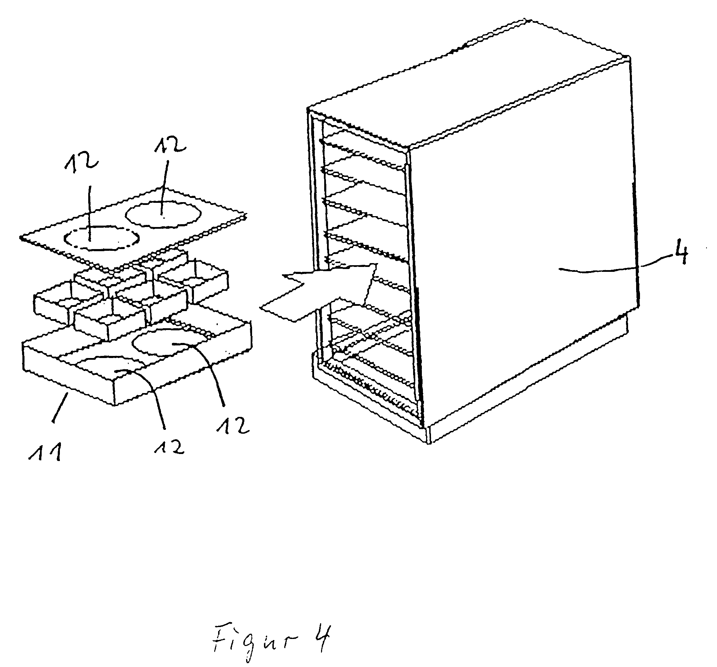

In der Figur 4 ist ein weiteres Beispiel einer erfindungsgemäßen Vorrichtung 10 dargestellt, das ähnlich wie herkömmliche Öfen eingesetzt werden kann. Dabei können Einschubbehälter 11 verwendet werden, die vorab befüllt werden können. Dabei können in diesen auch herkömmliche Teller mit Speisen erwärmt werden, wobei sich auch hier der erzeugte bzw. verwendete Dampf in Verbindung mit induktiver Erwärmung vorteilhaft auswirkt.

Schematisch sind in den Einschubbehältern 11 die eigentlichen Wärmequellen in Form von hier kreisförmigen metallischen Folien 12, mit denen die umgewandelte Energie als Wärme ausgenutzt werden kann, dargestellt.

Die Elektronik und der Generator sind hier günstig im hinteren Teil der Vorrichtung 4 untergebracht. Zur Erleichterung von Wartung und Reparatur kann aber auch eine Schubladenlösung, von vorn zugänglich oder gar herausziehbar, verwendet werden.

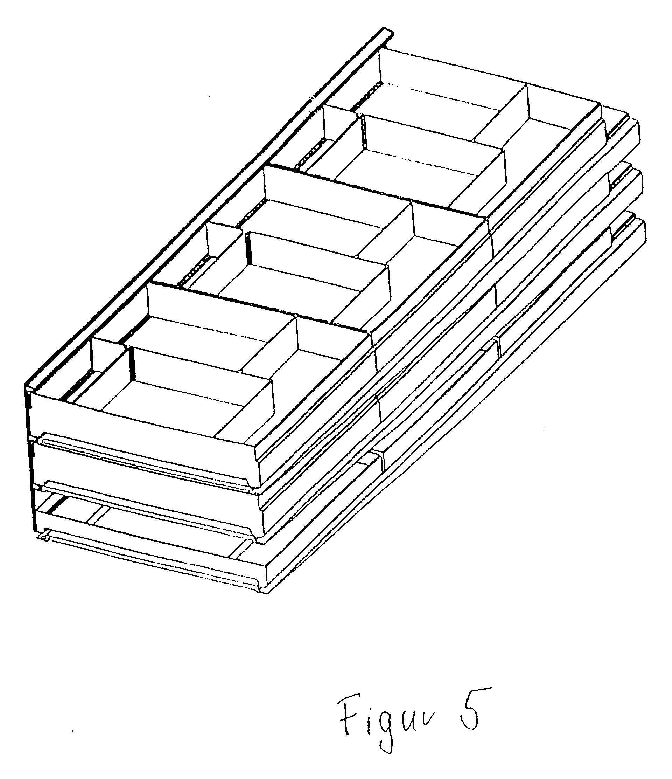

Mit dem in der Figur 5 dargestellten Beispiel wird ein Problem berücksichtigt, das auftreten kann, wenn Behältnisse, Einschubelemente oder Tabletts verwendet werden, die dicht aneinandergereiht und ggf. auch formschlüssig temporär miteinander verbunden (verbesserte Handhabbarkeit) in einem Speisetransportwagen in mehreren Ebenen übereinander angeordnet werden. In diesem Fall wird eine nahezu geschlossene Fläche je Ebene gebildet und der Wärmeaustausch behindert. Da Speisetransportwagen in der Regel von oben gekühlt werden, indem dort ein Trockeneis enthaltendes Fach angeordnet ist, kann es dazu kommen, daß die oberste Ebene so gekühlt wird, daß die Speisen tiefgefroren, die nächste Ebene gefroren und die darunter liegende kalt bis in den weiter unten liegenden Ebenen überhaupt keine Kühlung erreicht werden kann. Dies kann zu Beeinträchtungen, insbesondere der in den unteren Ebenen angeordneten Speisen und mit deren Verzehr zu schwerwiegenden Erkrankungen führen.

Um diesem Nachteil entgegenzuwirken und ein Durchdringen von Kälte auch zu den unteren Ebenen zu ermöglichen, sind in den Einschubbehältern, hier eine Menübox dargestellt, Durchströmkanäle ausgebildet, die bevorzugt um die zu erwärmenden Speisen bzw. Behältnisse, die solche enthalten, angeordnet sind. Mit den Durchströmkanälen ist eine relativ gleichmäßige Kühlung in jeweils einer Ebene und in den verschiedenen Ebenen erreichbar.

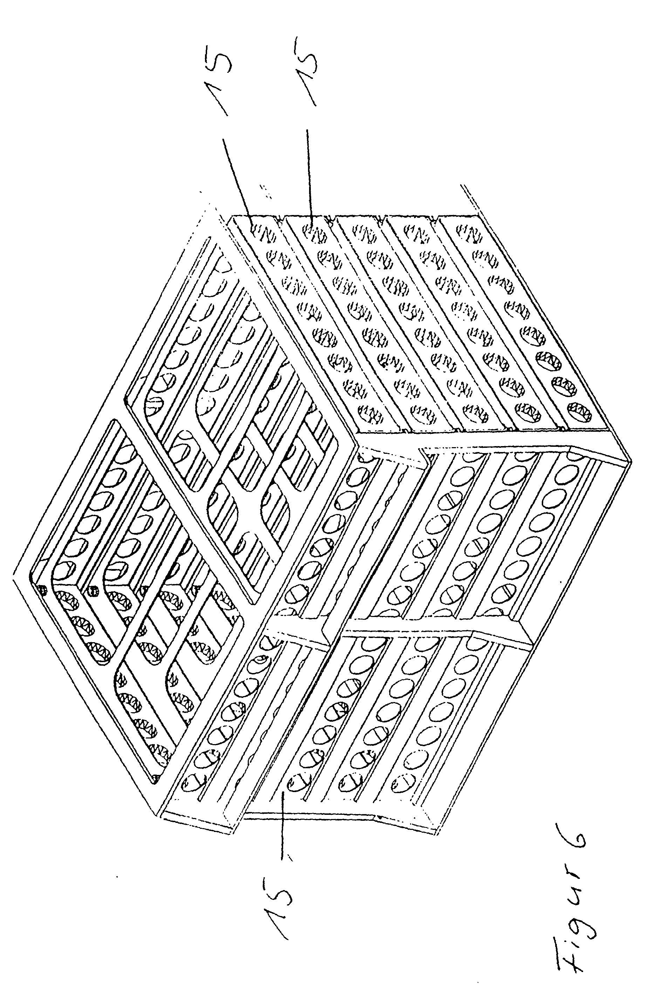

In der Figur 6 sind mehrere rahmenförmige Elemente 15 (Racks) in gestapelter Anordnung gezeigt. Diese können im wesentlichen aus einem geeigneten Kunststoff oder z.B. auch Aluminium bestehen. Es können auch Blenden aus einem schlecht wärmeleitenden Material (z.B. Holz) angebracht sein, die dann auch Griffunktion übernehmen können.

Diese Elemente 15 erleichtern primär die Handhabung können aber auch als Adapter zur Anpassung der verschiedenen Größen von Behältnissen bzw. verschieden großen Öfen oder Speisetransportwagen dienen.

In nichtdargestellter Form können an den Elementen 15 Deckel vorhanden sein, die mittels Scharnieren die in Behältnissen aufgenommenen Speisen temporär abdecken. Dies kann in Erwärmungs-, Lager- oder Kühlphasen der Fall sein. Die Deckel können ein- oder mehrteilig sein, wobei zumindest teilweise induktiv erwärmbare Bereiche an einer solchen Deckelkonstruktion vorhanden sein sollten. Die Deckel können auch teilweise als Wasserspeicher fungieren. Das Wasser kann über beispielsweise temporär verschließbare Öffnungen verdampft werden.

## Patentansprüche

1. Verfahren zur Erwärmung vorgefertigter in verschlossenen Behältnissen (5, 6, 7, 8, 11) aufgenommenen Speisen,
mit Induktionsheizspulen (12) und Heißdampf,
bei dem der Heißdampf durch Verdampfung einer speisenspezifischen Wassermenge unter Ausnutzung der induktiv erzeugten Wärme in den Behältnissen (5, 6, 7, 8, 11) erzeugt wird.

2. Verfahren nach Anspruch 1,
**dadurch gekennzeichnet, daß** das zu verdampfende Wasser in einen zumindest teilweise offenen Kanal, eine Röhre oder einen porösen Körper, die jeweils zumindest teilweise aus einem elektrisch leitenden Material bestehen, in einer für die jeweilige zu erwärmende Speise spezifischen Menge eingefüllt wird.

3. Verfahren nach Anspruch 1 oder 2,
**dadurch gekennzeichnet, daß** das Wasser in ein die zu erwärmende Speise enthaltendes Behältnis (5, 6, 7, 8, 11), das zumindest teilweise aus einem elektrisch leitenden Material besteht, ein solches enthält oder damit beschichtet ist, gefüllt und das Behältnis mit einem Deckel verschlossen wird.

4. Verfahren nach einem der Ansprüche 1 bis 3,
**dadurch gekennzeichnet, daß** die die Speisen enthaltenden Behältnisse (5, 6, 7, 8) in verschließbare Einschubbehälter (11) und anschließend in einen Ofen (2, 4, 10) eingeführt werden, wobei durch Induktionsheizspulen (12) im Ofen (2, 4, 10) oder durch in zumindest in den Böden der Einschubbehälter (11) integrierte Induktionsheizspulen (12) das Wasser im Ofen (2, 4, 10) oder im jeweiligen Einschubbehälter (11) verdampft und/oder oberhalb der Kondensationstemperatur gehalten wird.

5. Verfahren nach einem der Ansprüche 1 bis 4,
**dadurch gekennzeichnet, daß** ein isolierter Speisetransportwagen (1) mit Speisen und Getränke enthaltenden Behältnissen (5, 6, 7, 8) bestückten Tabletts befüllt und die zu erwärmenden Speisen enthaltenden Behältnisse (5, 6, 7, 8) darauf lokal definiert in bezug zu Induktionsheizspulen (12) angeordnet werden;
und die Induktionsheizspulen (12) in ebenen zungenförmigen, ortsfesten Elementen (3) integriert sind, die bei geöffnetem Speisetransportwagen (1) in diesen oder durch Schlitze eingeführt und in bezug zu den Tabletts positioniert werden.

6. Verfahren nach einem der Ansprüche 1 bis 5,
**dadurch gekennzeichnet, daß** die Temperatur und die Zeit während der Erwärmung gemessen werden.

## Claims

1. A process for heating pre-prepared meals accommodated in closed receptacles (5, 6, 7, 8, 11), with induction heating coils (12) and hot steam, in which process the hot steam is generated by evaporation of a meal-specific amount of water using the inductively generated heat in the receptacles (5, 6, 7, 8, 11).

2. The process as claimed in claim 1, **characterized in that** the water to be evaporated is filled into an at least partially open channel, a tube or a porous body, which respectively consist at least partially of an electrically conducting material, in an amount specific for the respective meal to be heated.

3. The process as claimed in claim 1 or 2, **characterized in that** the water is filled into a receptacle (5, 6, 7, 8, 11) which contains the meal to be heated and consists at least parially of an electrically conducting material, contains such a material or is coated with such a material, and the receptacle is closed by a lid.

4. The process as claimed in one of claims 1 to 3, **characterized in that** the receptacles (5, 6, 7, 8) containing the meals are introduced into closable push-in containers (11) and subsequently into an oven (2, 4, 10), the water in the oven (2, 4, 10) or in the respective push-in container (11) being evaporated and/or kept above the condensation temperature by induction heating coils (12) in the oven (2, 4, 10) or by induction heating coils (12) integrated at least in the bases of the push-in containers (11).

5. The process as claimed in one of claims 1 to 4, **characterized in that** an insulated meal transporting cart (1) filled with trays loaded receptacles (5, 6, 7, 8) containing items of food and drinks, and the receptacles (5, 6, 7, 8) containing meals to be heated are then arranged thereon in a locally defined manner with respect to induction heating coils (12);
and the induction heating coils (12) are integrated in planar tongue-shaped, fixed elements (3) which, when the meal transporting cart (1) is opened, are introduced into the latter or through slots and are positioned with respect to the trays.

6. The process as claimed in one of claims 1 to 5, **characterized in that** the temperature and the time are measured during the heating.

## Revendications

1. Procédé pour réchauffer des aliments déjà préparés contenus dans des récipients (5, 6, 7, 8, 11) fermés,
au moyen de bobines de chauffage par induction (12) et de vapeur de chauffage,
dans lequel la vapeur de chauffage est produite par évaporation d'une quantité d'eau spécifique à l'aliment en utilisant la chaleur produite par induction dans les récipients (5, 6, 7, 8, 11).

2. Procédé selon la revendication 1,
**caractérisé en ce que** l'eau devant être évaporée dans un canal au moins partiellement ouvert, un tube ou un corps poreux, qui se composent respectivement au moins partiellement d'un matériau conducteur électriquement, est remplie en quantité spécifique à chaque aliment devant être réchauffé.

3. Procédé selon la revendication 1 ou 2,
**caractérisé en ce que** l'eau est remplie dans un récipient (5, 6, 7, 8, 11) contenant l'aliment à réchauffer qui se compose au moins partiellement d'un matériau conducteur électriquement, qui contient celle-ci ou est recouvert de celle-ci, et le récipient est fermé par un couvercle.

4. Procédé selon une des revendications 1 à 3, **caractérisé en ce que** les récipients (5, 6, 7, 8) contenant les aliments sont introduits dans des réservoirs en tiroirs (11) verrouillables, puis dans un four (2, 4, 10), l'eau dans le four (2, 4, 10) ou dans chaque réservoir en tiroirs (11) étant évaporée et/ou maintenue à une température supérieure à la température de condensation par des bobines de chauffage par induction (12) dans le four (2, 4, 10) ou par des bobines de chauffage par induction (12) intégrées au moins dans les fonds des réservoirs à tiroirs (11).

5. Procédé selon une des revendications 1 à 4, **caractérisé en ce qu'**un chariot de transport (1) des aliments isolé est rempli de tablettes équipées de récipients (5, 6, 7, 8) contenant les aliments et les boissons, et les récipients (5, 6, 7, 8) contenant les aliments à réchauffer sont disposés de façon localement définie sur celles-ci par rapport aux bobines de chauffage par induction (12) ;
et les bobines de chauffage par induction (12) sont intégrées dans des éléments (3) stationnaires, plats en forme de langue, lesquelles, lorsque le chariot de transport des aliments (1) est ouvert, sont introduites dans ceux-ci ou par des fentes et sont positionnées par rapport aux tablettes.

6. Procédé selon une des revendications 1 à 5, **caractérisé en ce que** la température et le temps sont mesurés pendant le réchauffage.
